# EUROPEAN PATENT SPECIFICATION

(11) **EP 2 954 381 B1**
(45) Date of publication and mention of the grant of the patent: **10.04.2019**
(21) Application number: 14706117.0
(22) Date of filing: 06.02.2014
(51) Int. Cl.: H02J 7/35, G05B 15/02, G05F 1/66, H05B 37/02

(54) **SYSTEM AND METHOD FOR ENHANCED SECURITY FOR SOLAR POWERED LIGHTING**
SYSTEM UND VERFAHREN FÜR VERBESSERTE SICHERHEIT EINER SOLARGETRIEBENE BELEUCHTUNG
SYSTÈME ET PROCÉDÉ DE SÉCURITÉ AMÉLIORÉE POUR ÉCLAIRAGE À ÉNERGIE SOLAIRE

(30) Priority: 07.02.2013 US 201361761928 P
(43) Date of publication of application: 16.12.2015
(73) Proprietor: Signify Holding B.V., 5656 AE Eindhoven (NL)
(72) Inventor: KAAG, Bjorn Christiaan Wouter, 5656 AE Eindhoven (NL)
(74) Representative: Vanden Wyngaert, Hilbrand
(86) International application number: PCT/IB2014/058830
(87) International publication number: WO 2014/122602

(56) References cited:
- EP-A1- 2 362 479
- EP-A1- 2 463 981
- WO-A1-2010/052738
- US-A1- 2012 323 386

## Description

The present invention relates to a method and system for providing enhanced lighting security of solar powered lighting, and, more particularly, an improved method and system to control when a dimming override function is allowed so as to limit and/or prevent energy reserves from being depleted during the night.

The conventional street lighting systems may incorporate a dimming system to save energy. One example of such a conventional dimming system is the Philips Lumistep dimming, which is available as an option for operators of lighting systems. Such dimming systems can be programmed with a fixed dimming profile. For example, dimming is typically applied in the midnight hours when there is not much traffic or when the operator simply wants to save electricity.

There may also be some difference in dimming profile used between summer and winter seasons. But the dimming profile is most often executed as a fixed reduction of lighting levels for a predetermined duration in time, based on either fixed programming or the time when main power was switched on/off or via another mechanism.

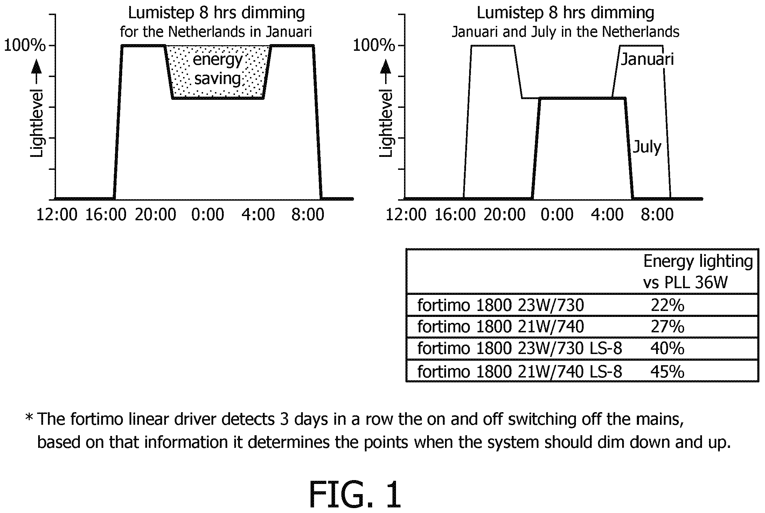

Fig. 1 shows a conventional dimming profile.

By applying the dimming profile, there is of course less light, but without a reference, a human eye will not easily detect a reduction of 30%-40% from the full brightness level. Some conventional lighting systems may also switch off the light entirely during parts of the night. This is also defined as dimming (i.e. 100%). The dimming may also occur dynamically, trigged via e.g., motion detection.

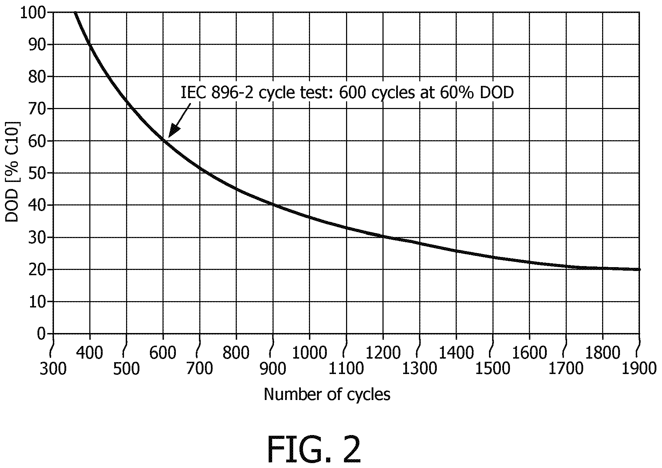

Solar powered lighting systems are also known in the art. In such conventional solar powered lighting systems, such conventional dimming systems may reduce the light levels (much) further to preserve energy. It should be understood that the solar powered lighting system is not connected to a power grid. The energy budget for the solar powered lighting system depends on electricity from solar radiation collected via photovoltaic (PV) panels. The energy collected is stored in a battery. In order to facilitate a long operational life, the battery may be substantially over dimensioned to avoid deep discharges. This is because deep discharges strongly limit the battery life. For example, Fig. 2 shows a graph of a degradation curve of battery energy storage.

In such solar powered lighting systems, the energy collection, however, is weather dependent. This means that the daily energy collection may not be enough to cover a (lighting) load for one night.

The over dimensioned battery may also constitute an energy buffer to bridge one or more days of bad weather when there is not enough sunlight to collect energy for normal operation. During one or more bad days, the solar lighting system may deplete part or the entire energy buffer at night. When there were several days of bad weather, however, the energy stored in the battery may not be enough to cover the complete night.

The conventional lighting systems discussed above may also include a dimming override feature. In certain situations, such as for example a traffic accident or emergency condition, an external signal is sent to a lighting unit to override a set dimming level. The external signal may be used to set a dimmed light level to full brightness and revert to an original dimming light level when the situation is deemed to have ended. An automatic reset may also be used to restore the original dimming light level. In the automatic reset case, a predetermined time interval (e.g., a few hours) is generally used to reset the original dimming level. It is noted that each situation may require its own special brightness levels for the dimming override.

However, such dimming override features cause problems for the solar powered lighting system. The dimming override feature may deplete the energy storage because there is no way to take into account that the weather in the subsequent days may be sufficient to restore the energy required for another night. In addition, when the dimming override is activated, the available energy in the battery may not be enough to support full brightness light levels until the end of the situation which will lead to total darkness.

Accordingly, a need exists in the art for systems and methods to address the shortcomings of the conventional systems described above. The invention is defined by the claims.

One aspect of the present invention is related to a method to determine if the present and available energy in the battery of a solar lighting unit can cover (1) the actual dimming override period requested and (2) subsequent nights after the battery energy is used due to the dimming override. Item (2) is important because even if the dimming override period can be covered, it may be that bad weather will limit energy collection in subsequent days following the dimming override so that the available energy in the battery cannot be completely used to cover the dimming override period. Otherwise, the solar lighting unit will not be able to provide lighting at sometime in the subsequent night(s).

One embodiment of the present invention is directed to a method to control a power override function for a solar powered device. The method includes the steps of receiving an override function signal, where the override function signal requests a change related to an energy consumption of a load of the solar powered device, determining if a current available stored energy amount in the solar powered device can provide enough energy for the change in the energy consumption of the load and estimating if an amount of energy depleted due to the change in the energy consumption can be recovered by solar generation in at least one or more subsequent days after the amount is depleted. The energy consumption of the load is changed if the current available stored energy can provide enough energy and the amount of energy depleted can be recovered.

Also disclosed is a method for energy consumption control for a solar powered device. The method includes the steps of creating a solar power supply model for the solar powered device, creating a power demand model for the solar powered device, refining the solar power supply model and the power demand model using augmented data, computing an energy balance model using the solar power supply model and the power demand model, and determining, based on the energy balance model, if an override capability is possible that would increase energy consumption of a load of the solar powered device.

In one aspect of the method described above, the step of refining the power demand model includes one or more of the following techniques and algorithms: statistic averaging of duration of increased energy consumption, statistic averaging of local weather phenomena, accounting for parasitic loads of other components related to the solar powered device, antifreeze operations related to the solar powered device, and backup capacity limits.

In another aspect of the method described above, the step of refining the power supply model includes one or more of the following techniques and algorithms that use additional data related to (1) required period in day cycles to restore backup capacity, (2) solar line of sight obstructions, (3) recorded local bad weather phenomena, (4) Linke Turbidity data, (5) local average daily and daytime temperatures, and (6) past and recorded solar energy collector performance.

Another embodiment of the present invention is directed to a solar powered lighting unit. The lighting unit includes a photo voltaic unit, a solar charger, a battery, a light control engine, a light producing means and a communication interface. The communication interface can communicate to a remote control/maintenance facility (e.g., a back office). The lighting unit also includes a controller. The controller is arranged to receive a dimming override signal via the communication interface. The dimming override signal requests a change related to light output of the light producing means. The controller is further arranged to determine if a current available stored energy amount in the battery can provide enough energy for the change in light output and estimates if the energy depleted due to the change can be recovered by solar generation in one or more subsequent days after the amount is depleted. The controller changes the light output if the current available stored energy can provide enough energy and the amount of energy depleted can be recovered.

In general, the various aspects and embodiments of the present invention may be combined and coupled in any way possible within the scope of the invention. The subject matter that is regarded as the invention is particularly pointed out and distinctly claimed in the claims at the conclusion of the specification.

The foregoing and other features and advantages of the invention will be apparent from the following detailed description taken in conjunction with the accompanying drawings.
Fig. 1 shows a conventional dimming profile.
Fig. 2 shows a graph of a degradation curve of battery energy storage
Fig. 3 shows an outdoor lighting system according to an embodiment of the invention.
Fig. 4 shows an off grid lighting (OSL) unit in accordance with one embodiment of the present invention.
Fig. 5 shows an example of a (PV) power supply map for a region.
Fig. 6 shows an example of a power demand map for the same region used in Fig. 5.
Fig. 7 is a flow diagram showing various methods and algorithms.
Fig. 8 shows an example of a darkness overview map for the same region used in Fig. 5.
Fig. 9 is a flow chart showing an overview of the dynamic control of devices and system.
Fig 10 is a flow diagram for a dimming override decision process.

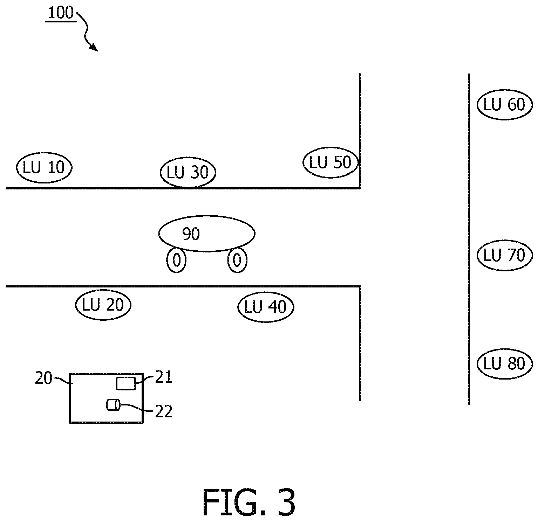

As shown in Fig. 3, an outdoor lighting system 100 includes a control unit 20 (e.g., a service center, back office, maintenance center, etc.) and one or more lighting units (LU10 - LU80). The control unit 20 may be located near or at a remote location from the LUs (LU10 - LU80). The central control unit 20 includes a communication unit 21 and may also include a database 22. The communication unit 21 is used to communicate with the LUs (LU10 - LU80). The control unit 20 is communicatively coupled to the LUs (LU10 - LU80), either directly or indirectly. For example, the control unit 20 may be in direct communication via a wired and/or wireless/wireless-mesh connection or an indirect communication via a network such as the Internet, Intranet, a wide area network (WAN), a metropolitan area network (MAN), a local area network (LAN), a terrestrial broadcast system, a cable network, a satellite network, a wireless network, power line or a telephone network (POTS), as well as portions or combinations of these and other types of networks.

The control unit 20 includes algorithms for operating, invoking on/off time and sequencing, dimming time and percentage, and other control functions. The control unit 20 may also perform data logging of parameters such as run-hours or energy use, alarming and scheduling functions.

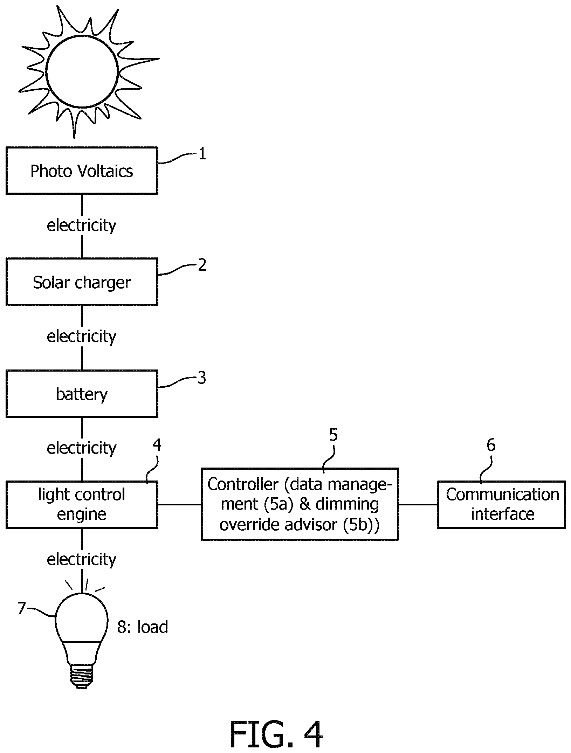

Fig. 4 shows one embodiment of the LU 10 that is directed to a battery powered photo voltaic system that generates electricity over the day during periods with sunlight, which is stored into a battery to power a load (e.g. a light engine) over the night and/or during periods without enough sunlight. Some components typical in battery powered off grid lighting (OSL) architecture are not shown for sake of clarity. It shall be appreciated that other embodiments are possible and are not limited by Fig. 4.

As shown in Fig. 4, the LU 10 includes photo voltaics 1, a solar charger 2, a battery 3, a light control engine 4, a control 5, a communication interface 6 and light producing means 7 (i.e., load).

The communication interface 6, as noted above in relation to the communication unit 21, may be any suitable communication arrangement to transfer data to and/or from the control unit 20. In this regard, via the communication interface 6, each LU (LU10 - LU80) maybe in communication, as may be needed, with the control unit 20 directly and/or via another LU. The communication interface 6 enables remote command, control, and monitoring of the LU 10.

The controller 5 includes a dimming override advisor module 5a and may include a data management module 5b.

The dimming override advisor module 5a may be configured to perform one or more of the following tasks: (1) power supply planning management, (2) power demand planning management and (3) dimming override management. Each of these tasks will now be explained.

Recording energy production from the photo voltaic (PV) 1 panels over time is known the art and implemented in more advanced solar invertors. However, one embodiment of the present invention, recorded PV performance data (e.g. I, V, T-ambient, T-panel) is passed to a planning module in the dimming override advisor 5a that creates a power supply map over a period of one or more days, so as to be able to predict the available energy production.

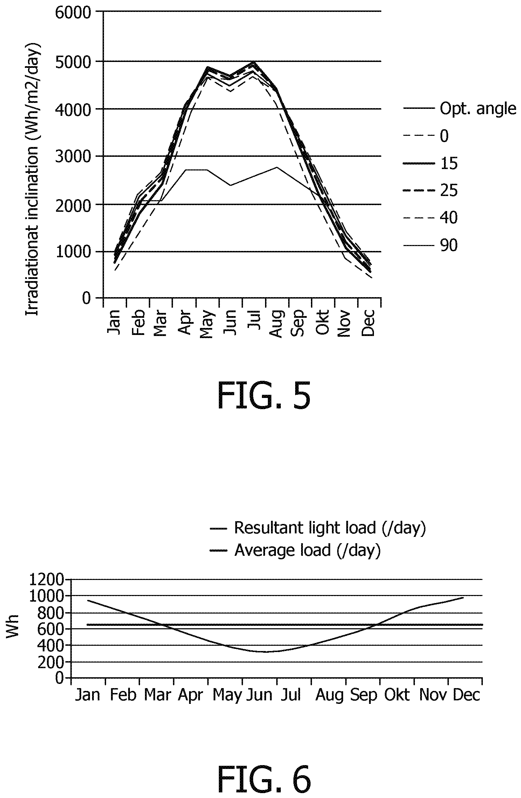

The power supply map determines the periods during the day, and/or the periods in the year, when the energy supply is sufficient to run all intended light load operations. Fig. 5 is an example of a (PV) power supply map for a region.

It is noted that light and dimming profiles are known of the art.

In one embodiment of the present invention, the lighting and dimming information/profiles are passed to the power demand planning module in the dimming override advisor 5a, which will create a power demand map. This enables the dimming override advisor 5a to plan the amount of energy that needs to be stored during a particular period. This power demand map include information about geographically computed hours of light and dark, combined with the light and dimming information, and will compute information such as, but not limited to, average load/day to plan the energy harvest and energy storage management. The power demand map may also be augmented using data from other sources to improve the quality thereof. The power demand map is used to improve predictions in what month or season there will be sufficient energy production or alternatively execute a different power demand profile, e.g. lower load to help manage the energy storage and avoid depletion.

Fig. 6 shows an example of the power demand map for the same region used in Fig. 5.

Planning energy storage over one or more days involves calculated decisions about PV size and storage size as well as advanced planning modules to avoid depletion of the energy storage. The dimming override management module in the dimming override advisor 5a produces the dimming override advice. This module plans and ensures that energy demand and supply are matched over (more than) one day and create a running energy balance that is updated continuously. This module also recommends (i.e., computes) an advice if there is enough charge and storage capability to allow for a dimming override command.

The data management module 5b may include various tasks related to data communication. For example, the data management module 5b may communicate performance (via the communication interface 6) to the control unit 20 and/or other offsite data collector. The may be done for integration in a back office for power management. The back office may include lighting oriented facility management tools or maintenance planning tools, etc. Additional data such as weather profiles, dimming profiles, etc. may also be communicated to and from the data management module 5b.

In addition, system performance artifacts of the dimming override advisor 5a, such as the new power supply map, power demand map, energy balance map and/or dimming override advice may be improved offline, after communication to the control unit 20 (e.g., the back office) for empirical learning, optimization and retransmission of an updated result back to the LU 10. In addition, feedback related to the ability to provide the dimming override via the signal to the control unit 20 may be provided. For example, the feedback may be visualized on a user interface at the control unit 20.

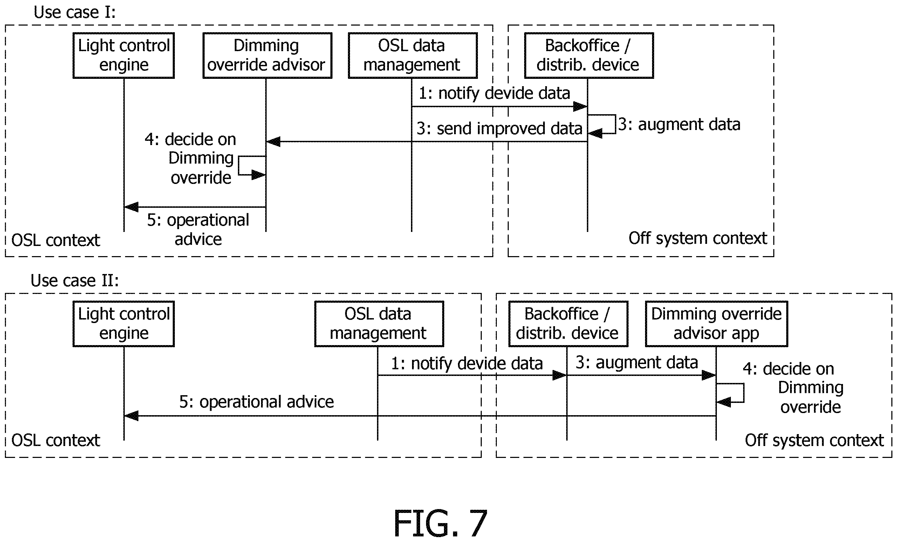

It is also noted that the back office applications may use knowledge and information from other areas and other cases (that may similar or not) to improve the prediction power for the LU 10 that notified the information to the control unit 20. As shown in Fig. 7, such dimming override algorithms can be implemented and run locally (case 1) on the LU 10 (acting as a lighting OSL) or alternatively distributed (case II) on a (lighting) management platform (OSL system) or a combination of both.

Referring to Fig. 4, the light control engine 4 may be, for example, dimmable ballast. Electronic or digital ballast uses solid state electronic circuitry to provide the proper starting and operating electrical condition to power fluorescent lamps, HID lamps or LED lamps. By controlling the operating electrical conditions, the LU 10 can be set at different dim levels.

The dimming level (or light level output) of the LUs (LU10 - LU88) is set, via the light control engine 4, based upon a power level signal from the controller 5. When assigning the dimming level to the LU 10, the controller 5 may assign dimming levels above 100% (full nominal power). This allows for a manual override capability to extend to dimming levels above 100%. As shown in Fig. 3, for example, the dimming levels of the LU20, LU30 and LU40 may be increased when a situation 90 occurs. The situation 90 is any temporary occurrence that may benefit from increased lighting, e.g., a car mechanical problem, an accident, a fire, a crime scene, or rescue site.

The light control engine 4 can also implement light management running an on/off profile or more advanced dimming profiles dimming a light load during pre set, fixed time periods. Even more advanced dimming profiles may automatically adapt to local events such as e.g. traffic.

The light control engine 4 will accept a signal from the dimming override advisor 5a if it is appropriate to perform the dimming override and run the light at full brightness or perhaps continue with the dimming to avoid depletion of the energy storage in the (near) future. Alternatively, the dimming override advisor 5a may advise any light brightness level in between the dimmed and full brightness level, as to maximize possible light but avoid depletion of the energy storage.

The ability or non-ability to perform the dimming override may be communicated to an end user by visible means, e.g. altering the light level in a certain pattern (for example but not limited to flashing on/off and/or altering intensity levels or colors or entirely different means).

In addition or alternatively the system may provide a data signal via the communication interface 6 to the end user or to the control unit 20. It should be understood that other embodiments can use entirely different means (for example but not limited to visible, audible, data, etc.) to notify to the end user and/or a back office system that a desired dimming override is currently not possible or is possible.

The battery 3 stores electricity from solar charger 2 for later use. Any energy storage technology may used and is not limited to (electrochemical) battery technology.

The solar charger 2 may also include a maximum power point tracking (MPPT) technique. The MPPT is a conventional technique that grid-tie inverters, solar battery chargers and similar devices use to get the maximum possible power from one or more photovoltaic devices, typically solar panels. The solar charger 2 controls solar charging and the MPPT maximize the power harvest from the PV panels. The MPPT solar charger information may be passed to the power demand planning module of the dimming override advisor 5a to enhance the quality of the power supply map.

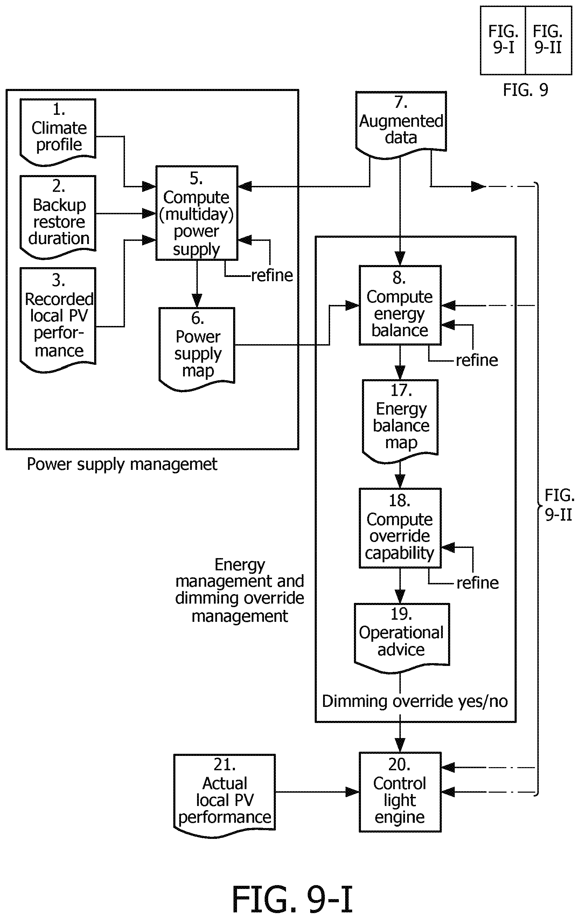

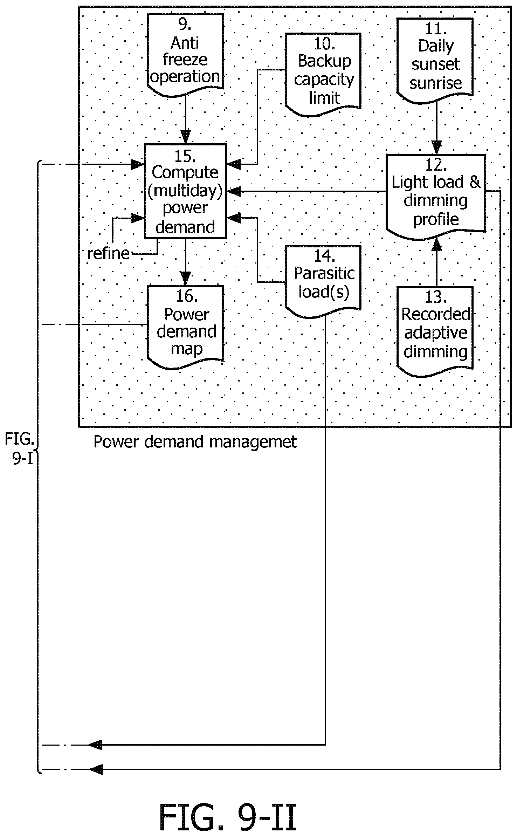

Fig. 9 is a flow chart showing an overview of the dynamic control of the LU 10 and the outdoor lighting system 100. This flow chart is used to explain the interaction of the processes that compute the power supply map, the power demand map and the energy balance map as well as the dimming override advice/decision.

The power supply map is comprised of multiple artifacts and lists the expected future energy supply per day over (more than) the whole year. An example of data used to create the power supply map (Fig. 5) is shown in table 1 below.

**Table 1 (data for power supply map)**

| Month | Irradiation at inclination: (Wh/m2/day) | | | | | | Linke turbidity | Optimal inclinatio n (deg.) |
|---|---|---|---|---|---|---|---|---|
| | Opt. angle | 0 | 15 | 25 | 40 | 90 | | |
| Jan | 957 | 618 | 786 | 881 | 988 | 971 | 3 | 64 |
| Feb | 2126 | 1395 | 1764 | 1967 | 2188 | 2060 | 2.9 | 60 |
| Mar | 2641 | 2149 | 2430 | 2561 | 2660 | 2093 | 3.7 | 44 |
| Apr | 4010 | 3586 | 3882 | 3988 | 3990 | 2681 | 3.7 | 33 |
| May | 4723 | 4642 | 4810 | 4813 | 4643 | 2687 | 3.9 | 20 |
| Jun | 4475 | 4614 | 4675 | 4617 | 4372 | 2390 | 4 | 13 |
| Jul | 4780 | 4802 | 4927 | 4900 | 4685 | 2610 | 4.3 | 17 |
| Aug | 4386 | 4075 | 4333 | 4405 | 4342 | 2747 | 4.5 | 28 |
| Sep | 3281 | 2712 | 3048 | 3198 | 3296 | 2477 | 4.1 | 42 |
| Oct | 2330 | 1655 | 2006 | 2192 | 2380 | 2106 | 3.5 | 55 |
| Nov | 1306 | 825 | 1063 | 1198 | 1350 | 1328 | 3 | 64 |
| Dec | 734 | 467 | 599 | 674 | 759 | 759 | 3 | 65 |
| **Year avg** | **2979** | **2628** | **2860** | **2950** | **2971** | **2076** | **3.6** | **42.1** |

It is noted that a simple power supply map may be created from readily available "insolation" information such as for example:
http://sunbird.jrc.it/pvgis/apps/pvest.php

Other sources are available, such as insolation maps per season or month may also be used. Alternatively, databases can be used with recorded data such as for example but not limited to:
- average daily temperature & daytime temperature (influencing V performance in PV modules);
- irradiance (influencing I performance in PV modules);
- solar average (in Wh/m2/day) or STC sun hours; and
- statistical averages over longer periods.

The power supply map (Fig. 5) is augmented by additional data. The controller 5 implements refinement algorithms using the additional data to improve the yearly (PV) power supply map. This has two results (1) an adaptive Total Solar Resource Factor (i.e. TSRF) of the local site that can vary over the year(s) and (2) a strategy on how maximum energy can be harvested over the whole year. The additional data may include but is not limited to one or more of the follow:
- The required period in day cycles to restore the backup capacity. (The installed backup capacity may be adaptable, but must be restored when it has been depleted during multiple days of bad weather. The restoration will require additional PV capacity).
- Local Line Of Sight obstructions from local vegetation such as forestry. This data may be integrated into or uploaded to the LU 10 (for example growth tables of certain vegetation types). In addition, a sensor (not shown) may record growth of forestry (for example via pictures or detection of Line Of Sight obstruction) and predict reduction of TSRF (i.e. future progression in solar obstruction). This information is used in an energy balance map to refine the planned energy production by taking into account what periods in the year will produce enough energy. This information may be communicated to off-board systems to plan for vegetation maintenance or for other maintenance tasks such as a refill operation or some different operations.

- Statistic averaging of locally recorded bad weather phenomena's such as snow or clouds that lead to less PV power. This improves predictions after the first year. Alternatively this information may be augmented via data download over the communication interface 6.
- Local Line of Sight obstructions from for example buildings, mountains, hills, etc.
- Linke Turbidity data.
- Local average daily and daytime temperatures, potentially increasing or reducing PV performance.
- Past and recorded PV performance (I, V, T-ambient, T-panel).

The power demand map (Fig. 6) is comprised of multiple artifacts and lists the expected future energy demand per day over (more than) the whole year. A simple power demand map may be created using day and night time data of the local site using readily available geographic information for example from:
http://www.timeanddate.com

Other sources are available, such as geographical tables and formulas from marine/aerial navigation or celestial navigation.

This data needs to be augmented by local phenomena such as mountain ranges, buildings, foreststry, etc. which may lead to a TSRF<100%. Many conventional databases have already done so. An example of such data, which is compressed to months for sake of simplicity, is listed in Table 2 below:

**Table 2 (data used for power demand map)**

| | | | S03 | S04 | | | | S05 |
|---|---|---|---|---|---|---|---|---|
| **sun limits** | profile over the year | days per month | sunrise (15^{th}) | sunset (15^{th}) | resultant hours of dark (sun down) | hide row :dark | hide row :daylight | hours of twilight |
| | **EINDHOVEN, NI** | | (hh:mm) | (hh:mm) | (hh:mm) | | | |
| | jan | 31 | 08:37 | 16:58 | 15:39 | 15.65 | 8.35 | TBD |
| | feb | 28 | 07:53 | 17:52 | 14:01 | 14.02 | 9.98 | TBD |
| | mar | 31 | 06:53 | 18:43 | 12:08 | 12.13 | 11.87 | TBD |
| | apr | 30 | 05:43 | 19:35 | 10:07 | 10.12 | 13.88 | TBD |
| | may | 31 | 04:46 | 20:24 | 08:22 | 8.37 | 15.63 | TBD |
| | jun | 30 | 04:21 | 20:57 | 07:24 | 7.4 | 16.6 | TBD |
| | jul | 31 | 04:39 | 20:48 | 07:51 | 7.85 | 16.15 | TBD |
| | aug | 31 | 05:24 | 20;00 | 09:24 | 9.4 | 14.6 | TBD |
| | sep | 30 | 06:13 | 18:52 | 11:21 | 11.35 | 12.65 | TBD |
| | oct | 31 | 07:02 | 17:44 | 13:18 | 13.3 | 10.7 | TBD |
| | nov | 30 | 07:56 | 16:49 | 15:07 | 15.12 | 8.88 | TBD |
| | dec | 31 | 08:37 | 16:30 | 16:07 | 16.12 | 7.88 | TBD |
| | | | | | | avg | avg | |
| | | | | | | 11.7 | 12.3 | |

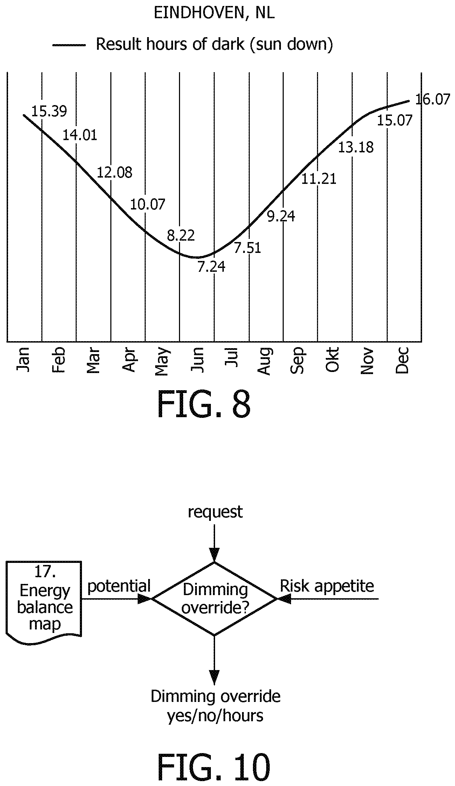

The data in table 2 is used to create a darkness overview (as shown in Fig. 8) over the whole year for the same region related to the power demand map shown in Fig. 6.

The resultant hours of darkness are incorporated into a light profile. The light profile may implement many reasons to offset the time of sunset or sunrise, to accommodate for example darker conditions due to bad weather, legislation, energy conservation or other reasons. In addition, dimming during darkness may be included (for example Philips Lumistep dimming).

A simplified example, compressed to months for sake of simplicity, is shown in Table 3 below.

**Table 3 (data for power demand map)**

| **load limits / load analysis** | desired light output | LED light full brightness | LED light dimmed | profile over the year | Light (h + or - = before/after dawn) | Light dimming profile | resultant light load (/day) | average load (/day) |
|---|---|---|---|---|---|---|---|---|
| | 5000 | 100% | 50% | | H | 00h-06h | Wh | Wh |
| | lm on (ass.) LED | 50 | 25 | jan | 0 | 6 | 633 | 445 |
| | learning curve | W | W | feb | 0 | 6 | 551 | 445 |
| | for year | lm/W | | mar | 0 | 6 | 457 | 445 |
| | | | | apr | 0 | 6 | 356 | 445 |
| | 2012 | | | may | 0 | 5 | 293 | 445 |
| | means | | | jun | 0 | 4 | 270 | 445 |
| | 100 | | | jul | 0 | 5 | 268 | 445 |
| | lm/W | | | aug | 0 | 6 | 320 | 445 |
| | results in | | | sep | 0 | 6 | 418 | 445 |
| | 50 | | | oct | 0 | 6 | 515 | 445 |
| | W | | | nov | 0 | 6 | 606 | 445 |
| | | | | dec | 0 | 6 | 656 | 445 |

The corresponding graph to Table 3 is the power demand map shown in Fig. 6.

The controller 5 implements refinement algorithms to improve the yearly power demand map (Fig 6). The refinement algorithms include but are not limited to one or more of the following:
- Statistic averaging of duration of adaptive dimming (e.g. Lumistep dimming), leading to longer periods of the light being turned on. This improves predictions after the first days/weeks/months of use as this depends on the local adaptive dimming, which is subject to local traffic in the vicinity of the installed pole. Alternatively this information may be augmented with data via communication interface 6.
- Statistic averaging of locally recorded bad weather phenomena's such as snow or clouds, leading to longer periods of the light being turned on. This progressively improves predictions, especially after the first whole year. Alternatively this information may be augmented with data via the communication interface 6.
- Parasitic loads of other system components that need to consume electrical energy. The data may be dynamic, coming from for example measuring alternating loads, which may be locally recorded. This data could also be defined by static budgets or a combination of both.
- Anti freeze operation: required additional energy for round the clock heat production to prevent freeze up of the electrolyte (in case of Pb-acid batteries) or to improve electrochemical kinetics of the battery (Arrhenius) or to prevent lithium plating etc. The required additional energy may be defined, for example, as the number of degree days where temperatures are below zero, in combination with data from thermal design modeling. Alternatively the data may be augmented by local recordings of temperatures and additional energy use. In addition, heaters may be implemented to melt snow on PV modules. The required energy is taken into account. The same ideas can be applied to prevent/reduce ice build up on the light.
- Applicable values for the (configurable) backup capacity limit. In the case the LU 10 has installed backup capacity; the power demand of the light profile needs to be extended with the additional energy demand for the backup restoration. This may be done in several steps, as described below using a conventional method:
   1. Gather total energy value of power demand map;
   2. Define system Energy Efficiency (which is EnEff Energy Storage * EnEff PV);
   3. Define Total Solar Resource Factor (which is EnEff of the local site);
   4. Compute daily required energy (power demand * EnEff system * TRSL);
   5. Gather peak sun hours under Standard Test Conditions;
   6. Compute the PV array size for the daily load in Wp;
   7. Define the backup capacity in days (the additional night cycles) and compute the total required energy for the current day plus additional backup days; and
   8. Define the backup restore duration in days and compute the corrected daily required energy (energy for the current night plus an additional part to restore backup capacity).

An example of the data related to this method is listed in Table 4 below:

**Table 4 (data for backup capacity limit)**

| **Batteries** | 1. gather total energy value of load anal | 2. system EnEff (ES * PV) | 3. site EnEff (TSRF) | 4. total daily req. energy | 5. gather peak sun hours | 6. compute array size for daily load | Note: batteries require worst month PV value | 7. total energy for daily & backup days | 8. corrected daily req. energy (day till fill) |
|---|---|---|---|---|---|---|---|---|---|
| | (Wh) | (pct) | (pct) | (Wh) | (h) | (W) | | 5 | 14 |
| jan | 633 | 73% | 73% | 870 | 0.96 | 909 | | 5222 | 1243 |
| feb | 551 | 73% | 73% | 758 | 2.13 | 357 | | 4548 | 1083 |
| mar | 457 | 73% | 73% | 628 | 2.64 | 238 | | 3770 | 898 |
| apr | 356 | 73% | 73% | 490 | 4.01 | 122 | | 2938 | 699 |
| may | 293 | 73% | 73% | 404 | 4.72 | 85 | | 2422 | 577 |
| jun | 270 | 73% | 73% | 372 | 4.48 | 83 | | 2229 | 531 |
| jul | 268 | 73% | 73% | 368 | 4.78 | 77 | smallest | 2208 | 526 |
| aug | 320 | 73% | 73% | 440 | 4.39 | 100 | | 2642 | 629 |
| sep | 418 | 73% | 73% | 574 | 3.28 | 175 | | 3447 | 821 |
| oct | 515 | 73% | 73% | 709 | 2.33 | 304 | | 4252 | 1012 |
| nov | 606 | 73% | 73% | 834 | 1.31 | 638 | | 5002 | 1191 |
| dec | 656 | 73% | 73% | 902 | 0.73 | 1229 | largest | 5415 | 1289 |

The energy balance map is comprised of multiple artifacts and lists the expected future energy balance per day over a longer period (which may be up to a whole year). An example of the data used in the energy balance map is listed in Tables 5a and 5b below, which is compressed to months for sake of simplicity.

**Table 5a (data for energy balance map)**

| **Batteries** | | jan | feb | mar | apr | may | jun |
|---|---|---|---|---|---|---|---|
| 1.gather total energy value of load anal | (Wh) | 633 | 551 | 457 | 356 | 293 | 270 |
| 2. system EnEff (ES * PV) | (pct) | 73% | 73% | 73% | 73% | 73% | 73% |
| 3.site EnEff (TSRF) | (pct) | 73% | 73% | 73% | 73% | 73% | 73% |
| 4.total daily req.energy | (Wh) | 870 | 758 | 628 | 490 | 404 | 372 |
| 5. gather peak sun hours | (h) | 0.96 | 2.13 | 2.64 | 4.01 | 4.72 | 4.48 |
| 6.compute array size for daily load | (W) | 909 | 357 | 238 | 122 | 85 | 83 |
| Note: batteries require worst month PV value | | | | | | | |
| 7.total energy for daily & backup days | 5 | 5222 | 4548 | 3770 | 2938 | 2422 | 2229 |
| 8.corrected daily req. energy (day till fill) | 14 | 1243 | 1083 | 898 | 699 | 577 | 531 |
| 9.PV array size (offsetted for backup) | (Wp) | 1299 | 509 | 340 | 174 | 122 | 119 |
| 10.cost of PV | Eur | 1299 | 509 | 340 | 174 | 122 | 119 |
| 11.Simulate energy balance @ PV of (Wp) | 1760 | 20.4 | 67.5 | 100.6 | 159.1 | 198.0 | 181.8 |
| Energy input (from sun to storage) | (kWh/month) | 42.2 | 84.6 | 116.4 | 171.0 | 208.1 | 190.8 |
| Energy output (from storage to load) | (kWh/ month) | 21.8 | 17.1 | 15.7 | 11.9 | 10.1 | 9.0 |
| Energy per 1 Wp (from sun to PV only) | | 0.025 | 0.051 | 0.070 | 0.102 | 0.124 | 0.114 |
| 12.energy req. from storage (incl.backup) | (Wh) | 4217 | 3672 | 3044 | 2372 | 1956 | 1800 |

**Table 5b (data for energy balance map)**

| **Batteries** | | jul | aug | sep | oct | nov | dec |
|---|---|---|---|---|---|---|---|
| 1.gather total energy value of load anal | (Wh) | 268 | 320 | 418 | 515 | 606 | 656 |
| 2.system EnEff (ES * PV) | (pct) | 73% | 73% | 73% | 73% | 73% | 73% |
| 3.site EnEff (TSRF) | (pct) | 73% | 73% | 73% | 73% | 73% | 73% |
| 4.total daily req. energy | (Wh) | 368 | 440 | 574 | 709 | 834 | 902 |
| 5.gather peak sun hours | (h) | 4.78 | 4.39 | 3.28 | 2.33 | 1.31 | 0.73 |
| 6.compute array size for daily load | (W) | 77 | 100 | 175 | 304 | 638 | 1229 |
| Note: batteries require worst month PV value | | smallest | | | | | largest |
| 7.total energy for daily & backup days | 5 | 2208 | 2642 | 3447 | 4252 | 5002 | 5415 |
| 8.corrected daily req. energy (day till fill) | 14 | 526 | 629 | 821 | 1012 | 1191 | 1289 |
| 9.PV array size (offsetted for backup) | (Wp) | 110 | 143 | 250 | 434 | 912 | 1756 |
| 10.cost of PV | Eur | 110 | 143 | 250 | 434 | 912 | 1756 |
| 11.Simulate energy balance @ PV of (Wp) | 1760 | 201.4 | 182.2 | 126.0 | 84.9 | 35.5 | 9.7 |
| Energy input (from sun to storage) | (kWh/ month) | 210.6 | 193.2 | 139.9 | 102.7 | 55.7 | 32.3 |
| Energy output (from storage to load) | (kWh/ month) | 9.2 | 11.0 | 13.9 | 17.7 | 20.2 | 22.6 |
| Energy per 1 Wp (from sun to PV only) | | 0.126 | 0.116 | 0.084 | 0.061 | 0.033 | 0.019 |
| 12.energy req. from storage (incl.backup) | (Wh) | 1783 | 2133 | 2783 | 3433 | 4039 | 4372 |

Step 8 (compute energy balance) of Fig. 9 compares energy input (i.e. the power supply map) and energy output (i.e. the power demand map). Correspondingly, in Table 5, item numbered 11 (simulate energy balance), negative values show an energy deficit and energy storage would be depleted; and positive values show an energy surplus above the daily required load which may be (partially) stored if there is enough storage capacity.

It shall be appreciated that the example compresses the energy balance to months for sake of simplicity. The actual implementation of this embodiment is capable of comparing an energy balance in finer steps for one day up to the configured number of days. The method shown in Fig. 9 can cover any period of the year and offers the benefit to balance the energy supply and demand, which will develop different over the seasons for every geographical location on earth. The complete energy balance map for the whole year may be stored in the LU 10 and be continuously refined by an updated power supply map and power demand map. This improves the predictive power of the LU 10 and/or the outdoor lighting system 100. Alternatively, this artifact may reside outside the LU 10 in a back office or on a mobile device, as shown in case II in Fig. 7.

It is important that the energy balance does not use an overall system Energy Efficiency. The EnEff is split in the charging function and the discharging function.
- The computation of the energy input will use the EnEff chain from sun to storage (e.g. EnEff TSRF * PVarray * solar charger * battery charge capability)
- The computation of the energy output will use the EnEff chain from storage to load (e.g. EnEff battery discharge capability * light controller * light driver).

The dimming override decision process and method will now be described. The energy demand and energy supply is compared by the data management 5a module and results in the energy balance map as described above. The energy balance map may give an indication how long the LU 10 can run on the configured high and low light levels. This may be in for example total hours at maximum level, or the number of night cycles and presents the LU 10 with an initial operational capability.

The decision if the requested dimming override is possible or not possible may be augmented by additional considerations, such as for example (but not limited to):
- A configurable duration in days/hours of dimming override.
- A risk appetite, which may be fixed or dynamically updated, for example in relation to recorded weather events.

A typical decision process is shown in Fig. 10.

In various embodiments, the dimming override decision is implemented as a yes/no advice or alternatively an advice in the number of hours that the dimming override may be allowed and/or an advice for a light intensity level in between the dimmed light level and the full brightness level. Alternatively, the LU 10 may communicate a more detailed decision report as for example shown in Table 6 below. It shall be appreciated that Table 6 can be updated after the dimming override is started, since the dimming override advisor may continuously re-compute the override advice.

**Table 6 (decision report)**

| Days override | Dimming override possible | Risk |
|---|---|---|
| 1 day | Yes, at full brightness | Low |
| 2 days | Yes, at 80% intensity | High |
| 3 days | No | High |

The result will be identical: the dimming override advisor will provide information to the light control engine 4 to start a dimming override. The dimming override may automatically end (for example after the night cycle was completed). Alternatively, the dimming override advisor 5b will (also) notify when that dimming override has to end.

Solar street lighting: In case of solar powered street lighting as shown in the embodiment of Fig. 3, the present invention will take into account charge management. Depending on the hours before sunset, the LU 10 or the system 100 may decide to deplete only part or all of the available charge from its energy storage, to handle the emergency situation. If the sun will rise soon, the LU 10 or the system 100 may opt to use all of its charge for full brightness during the complete dimming override timeout. If there is not enough charge to cover the complete dimming override timeout, the LU 10 or the system 100 may opt to start running at almost full brightness and/or progressively dim the light to provide at least some lighting, which is clearly better than total darkness. The controller 5 may run alternative energy preservation profiles, but the main goal is to increase light levels for as long as is reasonably possible. One method to use the energy store's charge buffer wisely would be to perform statistical bookkeeping of "sun hours" and "bad days" to improve the judgment how deep the discharge can be executed, by avoiding the emergency discharge being so complete that on a subsequent bad day the photo voltaic will not harvest enough charge for the subsequent complete lighting cycle at night. This algorithm shall ensure that street lighting is still available the next night. As described above, the LU's 10 or the system's 100 decisions may also be improved by additional updates of weather and climate data, either via reception of augmented data via telecommunication networks, via uploads via an interface on the lighting point or via additional local sensors. A candidate would be e.g. the Philips Citytouch lighting management framework.

Connecting the information of to be expected energy harvest to an algorithmic decision to override local dimming, while still preserving charge and lighting availability, is a new insight. This feature may also be integrated into the commercial Philips "CityTouch" application framework.

Various embodiments of the present invention may also be applicable to other types of loads (i.e., not just lighting) such as managing power to water pumps, post disaster applications and recreational applications (maritime, campers, etc.).

## Claims

1. A method to control a power override function for a solar powered device, said method comprising the steps of:
receiving an override function signal, where the override function signal requests a change related to an energy consumption of a load of the solar powered device;
determining if a current available stored energy amount in the solar powered device can provide enough energy for the change in the energy consumption of the load;
estimating if an amount of energy depleted due to the change in the energy consumption can be recovered by solar generation in one subsequent day after the amount is depleted; and
changing the energy consumption of the load if the current available stored energy can provide enough energy and the amount of energy depleted can be recovered.

2. The method according to claim 1, wherein the change in the energy consumption of the load is in accordance with an energy use preservation profile.

3. The method according to any of the preceding claims, further comprising the step of notifying a user that the override function signal is possible which means that the current available stored energy can provide enough energy and the amount of energy depleted can be recovered.

4. The method according to any of the preceding claims, further comprising the step of returning the energy consumption of the load to the normal or previous level after a predetermined amount of time has passed after receiving the override function signal.

5. The method according to any of the preceding claims, wherein the solar powered device is an off grid lighting unit and the load is a light producing means.

6. The method according to any of the preceding claims, wherein the estimating step estimates a solar dependent energy budget that can be expected in the subsequent day and decides how much of the current available stored energy amount can be depleted related to the override function signal.

7. A solar powered device (LU 10), comprising:
a photo voltaic unit (1);
a solar charger (2) coupled to the photo voltaic unit;
an energy storage unit (3) coupled to the solar charger arranged to store energy from the photo voltaic unit (1);
a control engine (4) arranged to control the energy supply to a load (7);
a communication interface (6); and
a controller (5) coupled to the control engine (4) and the communication interface (6), wherein the controller (5) is arranged to receive an override function signal via the communication interface (6), wherein the override function signal requests a change related to an energy consumption of the load (7), the controller (5) is further arranged to determine if a current available stored energy amount in the energy storage unit (3) can provide enough energy for the change in the energy consumption of the load (7), and estimate if an amount of energy depleted due to the change in the energy consumption can be recovered by solar generation in one subsequent day after the amount is depleted, , and change the energy consumption of the load (7) if the current available stored energy can provide enough energy and the amount of energy depleted can be recovered.

8. The solar powered device (LU 10) according to claim 7, wherein the change in the energy consumption of the load (7) is in accordance with an energy use preservation profile.

9. The solar powered device (LU 10) according to claim 7 or 8, further comprising a user indicator that the override function signal is possible which means that the current available stored energy can provide enough energy and the amount of energy depleted can be recovered.

10. The solar powered device (LU 10) according to any of the claims 7 to 9, wherein the controller is further arranged to return the energy consumption of the load (7) to the normal or previous level after a predetermined amount of time has passed after receiving the override function signal.

11. The solar powered device (LU 10) according to any of the claims 7 to 9, wherein the solar powered device (LU 10) is an off grid lighting unit (LU 10) and the load (7) is a light producing means (7).

## Patentansprüche

1. Verfahren zur Steuerung einer Power-Override-Funktion für eine solarbetriebene Vorrichtung, wobei das Verfahren die folgenden Schritte umfasst, wonach:
ein Override-Funktions-Signal empfangen wird, wobei das Override-Funktions-Signal eine auf einen Energieverbrauch einer Last der solarbetriebenen Vorrichtung bezogene Änderung anfordert;
ermittelt wird, ob eine aktuell verfügbare, gespeicherte Energiemenge in der solarbetriebenen Vorrichtung genug Energie für die Änderung in dem Energieverbrauch der Last bereitstellen kann;
abgeschätzt wird, ob eine infolge der Änderung in dem Energieverbrauch erschöpfte Menge an Energie durch Solarerzeugung an einem nachfolgenden Tag nach erfolgter Erschöpfung der Energiemenge zurückgewonnen werden kann; und
der Energieverbrauch der Last geändert wird, wenn die aktuell verfügbare, gespeicherte Energie genug Energie bereitstellen kann und die erschöpfte Menge an Energie zurückgewonnen werden kann.

2. Verfahren nach Anspruch 1, wobei die Änderung in dem Energieverbrauch der Last in Übereinstimmung mit einem Energienutzungserhaltungsprofil erfolgt.

3. Verfahren nach einem der vorangegangenen Ansprüche, das weiterhin beinhaltet, dass einem Benutzer mitgeteilt wird, dass das Override-Funktions-Signal möglich ist, was bedeutet, dass die aktuell verfügbare, gespeicherte Energie genug Energie bereitstellen kann und die erschöpfte Menge an Energie zurückgewonnen werden kann.

4. Verfahren nach einem der vorangegangenen Ansprüche, das weiterhin den Schritt umfasst, der beinhaltet, dass der Energieverbrauch der Last auf den normalen oder vorhergehenden Level zurückgeht, nachdem nach Empfang des Override-Funktions-Signals ein vorgegebener Zeitraum verstrichen ist.

5. Verfahren nach einem der vorangegangenen Ansprüche, wobei die solarbetriebene Vorrichtung eine Off-Grid-Beleuchtungseinheit ist und die Last ein Lichterzeugungsmittel ist.

6. Verfahren nach einem der vorangegangenen Ansprüche, wobei der Schätzschritt das Abschätzen eines solarabhängigen Energiebudgets, das an dem nachfolgenden Tag erwartet werden kann, sowie das Entscheiden, wie sehr die aktuell verfügbare, gespeicherte Energiemenge, auf das Override-Funktions-Signal bezogen, erschöpft werden kann, beinhaltet.

7. Solarbetriebene Vorrichtung (LU 10), umfassend:
eine Photovoltaikeinheit (1);
ein Solar-Ladegerät (2), das mit der Photovoltaikeinheit gekoppelt ist;
eine Energiespeichereinheit (3), die mit dem Solar-Ladegerät gekoppelt und zur Speicherung von Energie von der Photovoltaikeinheit (1) eingerichtet ist;
eine Control-Engine (4), die zur Steuerung der Energiezufuhr zu einer Last (7) eingerichtet ist;
eine Kommunikationsschnittstelle (6); sowie
einen Controller (5), der mit der Control-Engine (4) und der Kommunikationsschnittstelle (6) gekoppelt ist, wobei der Controller (5) so eingerichtet ist, dass er ein Override-Funktions-Signal über die Kommunikationsschnittstelle (6) empfängt, wobei das Override-Funktions-Signal eine auf einen Energieverbrauch der Last (7) bezogene Änderung anfordert, wobei der Controller (5) weiterhin so eingerichtet ist, dass er ermittelt, ob eine aktuell verfügbare, gespeicherte Energiemenge in der Energiespeichereinheit (3) genug Energie für die Änderung in dem Energieverbrauch der Last (7) bereitstellen kann, und abschätzt, ob eine infolge der Änderung in dem Energieverbrauch erschöpfte Menge an Energie durch Solarerzeugung an einem nachfolgenden Tag nach erfolgter Erschöpfung der Energiemenge zurückgewonnen werden kann, und den Energieverbrauch der Last (7) ändert, wenn die aktuell verfügbare, gespeicherte Energie genug Energie bereitstellen kann und die erschöpfte Menge an Energie zurückgewonnen werden kann.

8. Solarbetriebene Vorrichtung (LU 10) nach Anspruch 7, wobei die Änderung in dem Energieverbrauch der Last (7) in Übereinstimmung mit einem Energienutzungserhaltungsprofil erfolgt.

9. Solarbetriebene Vorrichtung (LU 10) nach Anspruch 7 oder 8, weiterhin umfassend eine Benutzeranzeige, dass das Override-Funktions-Signal möglich ist, was bedeutet, dass die aktuell verfügbare, gespeicherte Energie genug Energie bereitstellen kann und die erschöpfte Menge an Energie zurückgewonnen werden kann.

10. Solarbetriebene Vorrichtung (LU 10) nach einem der Ansprüche 7 bis 9, wobei der Controller weiterhin so eingerichtet ist, dass er den Energieverbrauch der Last (7) auf den normalen oder vorhergehenden Level zurückbringt, nachdem nach Empfang des Override-Funktions-Signals ein vorgegebener Zeitraum verstrichen ist.

11. Solarbetriebene Vorrichtung (LU 10) nach einem der Ansprüche 7 bis 9, wobei die solarbetriebene Vorrichtung (LU 10) eine Off-Grid-Beleuchtungseinheit (LU 10) ist und die Last (7) ein Lichterzeugungsmittel (7) ist.

## Revendications

1. Procédé de commande d'une fonction de surpassement de puissance pour un dispositif alimenté par énergie solaire, ledit procédé comprenant les étapes de :
réception d'un signal de fonction de surpassement, où le signal de fonction de surpassement demande un changement lié à une consommation d'énergie d'une charge du dispositif alimenté par énergie solaire ;
détermination si une quantité d'énergie stockée disponible courante dans le dispositif alimenté par énergie solaire peut fournir assez d'énergie pour le changement de la consommation d'énergie de la charge ;
évaluation si une quantité d'énergie appauvrie en raison du changement de la consommation d'énergie peut être récupérée par production solaire en un jour suivant après que la quantité est appauvrie ; et
changement de la consommation d'énergie de la charge si l'énergie stockée disponible courante peut fournir assez d'énergie et si la quantité d'énergie appauvrie peut être récupérée.

2. Procédé selon la revendication 1, dans lequel le changement de la consommation d'énergie de la charge est selon un profil de conservation d'utilisation d'énergie.

3. Procédé selon n'importe laquelle des revendications précédentes, comprenant en outre l'étape de notification à un utilisateur que le signal de fonction de surpassement est possible, ce qui signifie que l'énergie stockée disponible courante peut fournir assez d'énergie et que la quantité d'énergie appauvrie peut être récupérée.

4. Procédé selon n'importe laquelle des revendications précédentes, comprenant en outre l'étape de renvoi de la consommation d'énergie de la charge au niveau normal ou précédent après qu'un temps prédéterminé s'est écoulé après la réception du signal de fonction de surpassement.

5. Procédé selon n'importe laquelle des revendications précédentes, dans lequel le dispositif alimenté par énergie solaire est une unité d'éclairage hors réseau et la charge est un moyen de production de lumière.

6. Procédé selon n'importe laquelle des revendications précédentes, dans lequel l'étape d'évaluation évalue un budget énergétique dépendant du solaire qui peut être attendu le jour suivant et décide de combien la quantité d'énergie stockée disponible courante peut être appauvrie en liaison au signal de fonction de surpassement.

7. Dispositif alimenté par énergie solaire (LU 10), comprenant :
une unité photovoltaïque (1) ;
un chargeur solaire (2) couplé à l'unité photovoltaïque ;
une unité de stockage d'énergie (3) couplée au chargeur solaire, agencée pour stocker de l'énergie en provenance de l'unité photovoltaïque (1) ;
un moteur de commande (4) agencé pour commander la fourniture d'énergie à une charge (7) ;
une interface de communication (6) ; et
une unité de commande (5) couplée au moteur de commande (4) et à l'interface de communication (6), dans laquelle l'unité de commande (5) est agencée pour recevoir un signal de fonction de surpassement via l'interface de communication (6), dans laquelle le signal de fonction de surpassement demande un changement lié à une consommation d'énergie de la charge (7), l'unité de commande (5) est en outre agencée pour déterminer si une quantité d'énergie stockée disponible courante dans l'unité de stockage d'énergie (3) peut fournir assez d'énergie pour le changement de la consommation d'énergie de la charge (7), et évaluer si une quantité d'énergie appauvrie en raison du changement de la consommation d'énergie peut être récupérée par production solaire en un seul jour suivant après que la quantité est appauvrie, et changer la consommation d'énergie de la charge (7) si l'énergie stockée disponible courante peut fournir assez d'énergie et si la quantité d'énergie appauvrie peut être récupérée.

8. Dispositif alimenté par énergie solaire (LU 10) selon la revendication 7, dans lequel le changement de la consommation d'énergie de la charge (7) s'effectue selon un profil de conservation d'utilisation d'énergie.

9. Dispositif alimenté par énergie solaire (LU 10) selon la revendication 7 ou 8, comprenant en outre un indicateur utilisateur en ce que le signal de fonction de surpassement est possible, ce qui signifie que l'énergie stockée disponible courante peut fournir assez d'énergie et que la quantité d'énergie appauvrie peut être récupérée.

10. Dispositif alimenté par énergie solaire (LU 10) selon l'une quelconque des revendications 7 à 9, dans lequel l'unité de commande est en outre agencée pour renvoyer la consommation d'énergie de la charge (7) au niveau normal ou précédent après qu'une quantité de temps prédéterminée s'est écoulée après la réception du signal de fonction de surpassement.

11. Dispositif alimenté par énergie solaire (LU 10) selon n'importe laquelle des revendications 7 à 9, dans lequel le dispositif alimenté par énergie solaire (LU 10) est une unité d'éclairage hors réseau (LU 10) et la charge (7) est un moyen de production de lumière (7).
